# EUROPEAN PATENT SPECIFICATION

(11) **EP 4 614 075 B1**
(45) Date of publication and mention of the grant of the patent: **25.11.2026**
(21) Application number: 25162253.6
(22) Date of filing: 07.03.2025
(51) Int. Cl.: F24D 3/10, F16L 41/03

(54) **HYDRAULIC MANIFOLD FOR HYDRAULIC SYSTEMS**
HYDRAULISCHER VERTEILER FÜR HYDRAULISCHE SYSTEME
COLLECTEUR HYDRAULIQUE POUR SYSTÈMES HYDRAULIQUES

(30) Priority: 07.03.2024 IT 202400005077
(43) Date of publication of application: 10.09.2025
(73) Proprietor: OTMA S.r.l. con unico socio, 42041 Brescello (RE) (IT)
(72) Inventor: SPAGGIARI, Remo, 42041 Brescello (RE) (IT); BACCHINI, Mirko, 42041 Brescello (RE) (IT); RASTELLI, Raffaello, 42041 Brescello (RE) (IT)
(74) Representative: Studio Torta S.p.A.

(56) References cited:
- EP-A1- 3 159 614
- EP-A1- 3 901 524
- EP-B1- 3 329 168

## Description

### TECHNICAL FIELD

The present invention relates to a hydraulic manifold for multi-zone hydraulic systems.

### PRIOR ART

Manifolds for multi-zone systems are known in the sector of heating systems. Each manifold generally comprises a main hollow body, provided with hot-water and cold-water separation means, and with hot-water and cold-water sorting unions, respectively.

Typically, a manifold is obtained, for example, by starting from a tubular profile having a square/rectangular or round shape, inside which separation partitions between hot and cold water are welded, said profile is then closed at the ends by two welded head walls. Furthermore, on the profile holes are made, on which threaded unions for the hydraulic connections are welded.

EP3329168 and EP3159614 describe manifolds for multi-zone hydraulic systems of known type.

All this involves a rather artisan processing which entails several manual welding steps, which, of course, raise the price of the manufactured product.

### SUMMARY OF THE INVENTION

The main object of the present invention is thus to provide a manifold, which is capable of overcoming the problems of the state of the art and is easy and cost-effective to manufacture.

In particular, the main object of the present invention is to provide a manifold for multi-zone hydraulic systems in which the couplings and the compartmentations between the different elements are carried out by exploiting the precision of thermoplastic injection moulding, and there is no need to resort to welding, glueing or deformation operations.

According to the present invention, a manifold for multi-zone hydraulic systems is provided, according to what is claimed by the appended claims.

### BRIEF DESCRIPTION OF THE DRAWINGS

In order to better understand the present invention, some preferred embodiments are described in the following, by way of non-limiting examples and with reference to the accompanying drawings, wherein:
- Figure 1 is a side view of a first embodiment of a manifold, manufactured in accordance with the present invention, with an exploded view of a detail;
- Figure 2 is a cross-section of the manifold of Figure 1, according to a section plane identified by line II-II of Figure 1;
- Figure 3 is a side view of a second embodiment of the manifold of Figure 1, with an exploded view of a detail;
- Figure 4 is a cross-section of the manifold of Figure 3, according to a section plane identified by line IV-IV of Figure 3;
- Figure 5 is a side view of a third embodiment of the manifold of Figure 1, which is not according to the invention, with an exploded view of a detail;
- Figure 6 is a cross-section of the manifold of Figure 5, according to a section plane identified by line VI-VI of Figure 5.

### DETAILED DESCRIPTION OF THE INVENTION

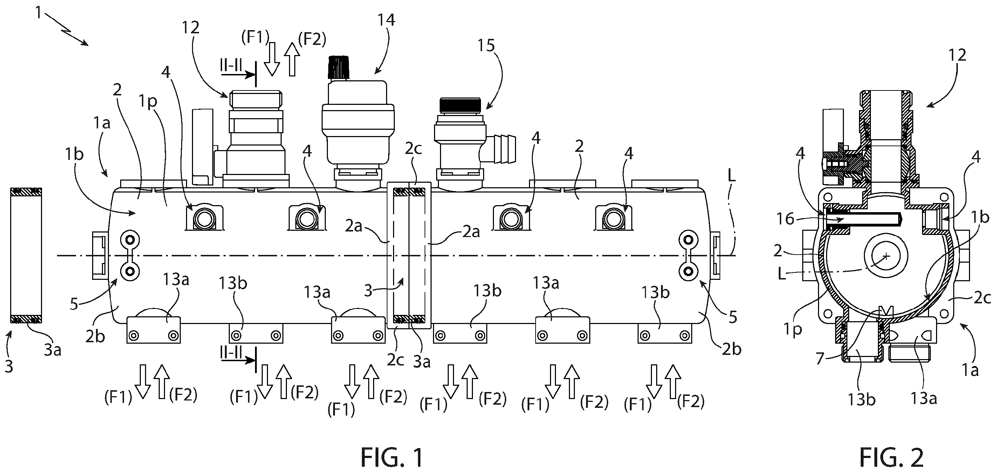

In Figures 1, 3 and 5, reference numeral 1 indicates a manifold for multi-zone hydraulic systems comprising a main hollow body 1a having a tubular development along an axis L and in which at least one compartment for distributing or collecting hot and/or cold water is defined.

Advantageously, the manifold 1 is made of a composite material, preferably a thermoplastic matrix.

Specifically, the main hollow body 1a comprises a side wall 1p which has a tubular development along the axis L and defines the at least one compartment therein.

In the illustrated case, the main hollow body 1a has a circular-shaped cross-section (visible in Figures 2,4 and 6).

The main hollow body 1a is obtained by assembling two hollow pieces.

The manifold 1 comprises two secondary hollow bodies 2 and a sealing element 3 which is interposed between the two secondary hollow bodies 2 and connects them so as to define the main hollow body 1a.

With reference to the secondary hollow bodies 2, the latter are identical and comprise a respective first end 2a and a respective second end 2b opposite the first end along the axis L.

The secondary hollow bodies 2 are connected to the sealing element 3 in a mirror-like manner.

Advantageously, the secondary hollow bodies 2 comprise at their respective first end 2a a respective flange 2c, which are configured to support the sealing element 3.

Preferably, the flanges 2c define the respective first ends 2a.

Specifically, the flanges 2c have a discoidal conformation which is concentric to the respective secondary hollow body 2 and house the sealing element 3 therein so as to connect the secondary hollow bodies 2 in a mirror-like manner.

More specifically, the two main bodies 2 are fixed to each other in a mirror-like manner at their respective flanges 2c.

The main hollow body 1a further comprises hydraulic connections 4. Preferably, the hydraulic connections 4 define internal engagement coupling seats.

Advantageously, each secondary hollow body 2 comprises, on opposite sides, identical hydraulic connections 4.

In the examples illustrated in the figures, each secondary hollow body 2 comprises two pairs of hydraulic connections 4 (only one of the two pairs of a respective secondary hollow body 2 is visible in Figures 1,3 and 5), each pair arranged in a mirror-like manner with respect to the other (Figures 2,4 and 6). In particular, one pair is supported by the side wall 1p on one side and the other pair is supported by the side wall 1p on the diametrically opposite side.

The main hollow body 1a further comprises fixing elements 5 to be fitted to a hydraulic system. Advantageously, each secondary hollow body 2 comprises, on opposite sides, identical fixing elements 5.

In the example illustrated in the figures, each secondary hollow body 2 comprises two fixing elements 5 (only one of the two of a respective secondary hollow body 2 is visible in Figures 1,3 and 5), which are arranged in a mirror-like manner with respect to the other (Figures 2,4 and 6). In particular, for each secondary hollow body 2, a fixing element is supported by the side wall 1p on one side and the other is supported by the side wall 1p on the diametrically opposite side. More in particular, the respective fixing elements 5 of a secondary hollow body 2 are fixed to the side wall 1p at the respective second end 2b.

With reference to the sealing element 3, the latter is designed to define, within the main hollow body 1a, the at least one compartment.

Preferably, the sealing element 3 is an element of radial type.

According to a first embodiment of the present invention illustrated in Figures 1 and 2, the sealing element 3 is an O-ring 3a which defines, within the main hollow body 1a, one single compartment 1b for distributing or collecting hot or cold water.

In particular, the O-ring 3a comprises a through hole having an axis coincident with the axis L.

According to such embodiment, the manifold 1 is adapted to be used in uniform-temperature heating systems.

The manifold 1 comprises guide tracks 7 (visible in Figures 2,4 and 6) designed to be coupled to hot-water and cold-water separation means 6.

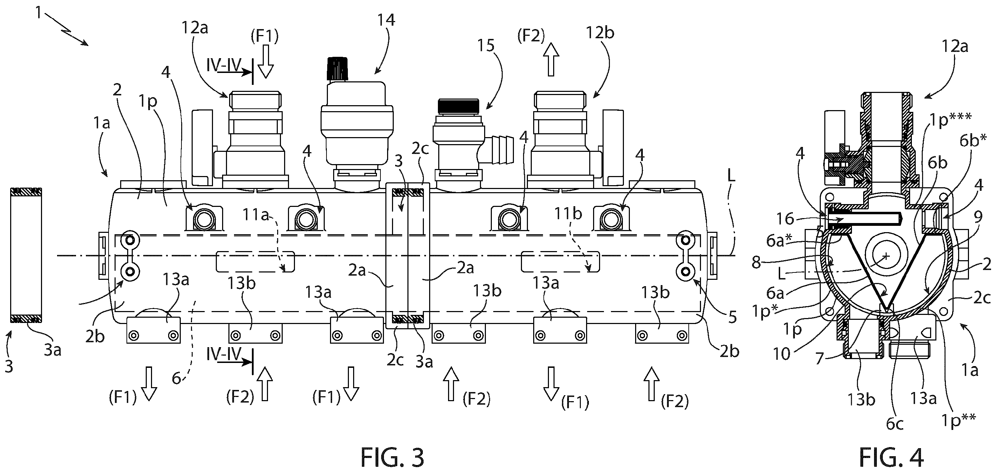

According to a second embodiment of the present invention illustrated in Figures 3 and 4, the manifold 1 comprises separation means 6 housed in the main hollow body 1a.

Advantageously, the separation means 6 are inserted inside the main hollow body 1a in a removable manner.

The sealing element 3 is configured to cooperate with the separation means 6 to define, within the main hollow body 1a, a plurality of sections for distributing and collecting hot and cold water, respectively.

Still according to the second embodiment, the separation means 6 cooperate with the O-ring 3a.

According to such embodiment, the manifold 1 defines a hydraulic separator adapted to be used in heating systems operating at high temperature (for example, towards radiators) and at low temperature (for example, towards radiant floor panels).

The separation means 6 are supported by the side wall 1p, on which they are arranged, and extend along the axis L over the entire length of the side wall 1p. The separation means 6 are coupled to the guide tracks 7.

Preferably, the separation means 6 are defined by a partition with a V-shaped profile.

Specifically and as is illustrated in Figure 4, the separation means 6 comprise two walls 6a and 6b joined by an edge 6c. Each wall 6a,6b further comprises a respective base segment 6a*,6b*.

More specifically, the edge 6c rests on the tracks 7, whereas the base segments 6a*,6b* rest on respective upper portions of the side wall 1p.

The separation means 6 divide the compartment 1b into a first section 8, a second section 9 and a third section 10.

In particular, the first section 8 is defined by the wall 6a and by a first portion 1p* of the side wall 1p. The second section 9 is defined by the wall 6b and by a second portion 1p** of the side wall 1p. Lastly, the third section 10 is defined by the walls 6a, 6b and by a third portion 1p*** of the side wall 1p.

It should be noted that the portions 1p*,1p** and 1p*** define the side wall 1p.

Advantageously, as is illustrated in Figure 3, the separation means 6 comprise a first through opening 11a and a second through opening 11b for water outflow.

Specifically, the first opening 11a is obtained through the wall 6a, whereas the second opening 11b is obtained through the wall 6b.

The first opening 11a establishes a hydraulic communication between the first section 8 and the third section 10, and the second opening 11b establishes a hydraulic communication between the second section 9 and the third section 10.

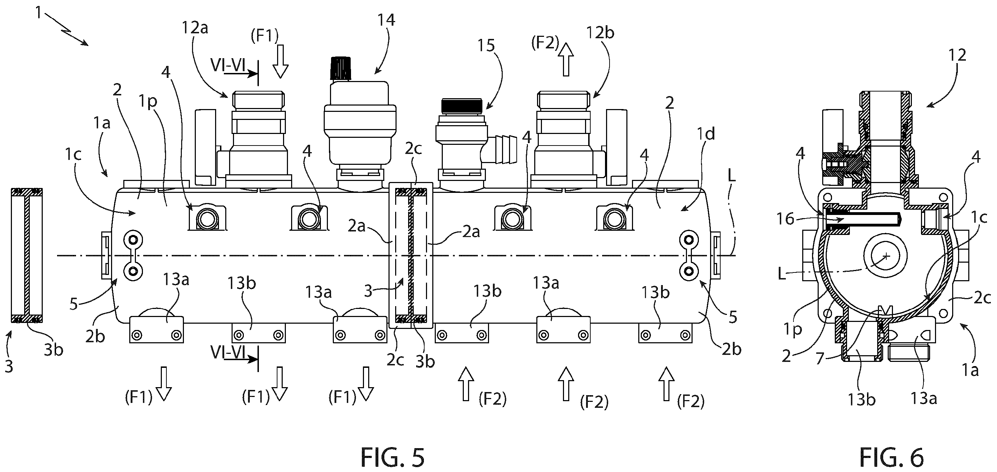

According to a third embodiment not according to the present invention illustrated in Figures 5 and 6, the sealing element 3 is a closed diaphragm 3b which defines, within the main hollow body, two distinct compartments 1c,1d for distributing or collecting hot and cold water, respectively.

In particular, the compartments 1c,1d are not hydraulically communicating.

According to such embodiment, the manifold 1 is designed to be used in uniform-temperature heating systems.

The manifold 1 further comprises hot- and cold-water sorting ducts.

In particular and with reference to Figures 1, 3 and 5, the manifold 1 is suited to be hydraulically connected to at least one shut-off valve 12 from which a delivery or return/discharge water flow enters or exits, as indicated respectively by arrows (F1) and (F2).

Preferably, the manifold 1 comprises at least one shut-off valve 12a supported at the top by the main hollow body 1a.

In particular, the shut-off valve 12a comprises a through hole obtained at the top through the side wall 1p.

The manifold 1 further comprises delivery and return unions, respectively, hydraulically connected to the shut-off valve 12a and supported by the main hollow body 1a, in particular by the secondary hollow bodies 2.

In particular, the manifold 1 comprises parallel unions 13a, which comprise a respective through hole obtained at the bottom through the side wall 1p, and unions 13b which are parallel and transversely spaced from the unions 13a, which comprise a respective through hole obtained at the bottom through the side wall 1p.

According to the first embodiment, the manifold 1 comprises one single shut-off valve 12a, supported by one of the two secondary hollow bodies 2.

In particular, the shut-off valve 12a is configured as a general union for both delivery and return/discharge.

Advantageously, the unions 13a and 13b are both delivery and return unions.

With reference to Figure 1, the water flows passing through the shut-off valve 12a and the unions 13a and 13b should be noted, indicated by both arrows (F1) and (F2).

According to the second embodiment, the manifold 1 comprises two shut-off valves 12a, 12b, supported by a respective secondary hollow body 2. In particular, the shut-off valve 12a is configured as a general delivery union, whereas the shut-off valve 12b is configured as a general return union.

The unions 13a are delivery unions and the unions 13b are return unions.

With reference to Figure 3, the water flows which passing through the shut-off valve 12a and the unions 13a, indicated by arrow (F1), and, respectively, the water flows passing through the shut-off valve 12b and the unions 13b, indicated by arrow (F2), should be noted.

According to the third embodiment, the manifold 1 comprises two shut-off valves 12a, 12b, supported by a respective secondary hollow body 2. In particular, the shut-off valve 12a is configured as a general delivery union, whereas the shut-off valve 12b is configured as a general return union.

The unions 13a,13b supported together with the shut-off valve 12a by the same secondary hollow body 2 are delivery unions and, respectively, the unions 13a,13b supported together with the shut-off valve 12b by the same secondary hollow body 2 are return unions.

With reference to Figure 5, the water flows passing through the shut-off valve 12a and the unions 13a,13b supported by the same main body 2, indicated by arrow (F1), and, respectively, the water flows passing through the shut-off valve 12b and the unions 13a,13b supported by the same main body 2, indicated by arrow (F2), should be noted.

With reference to Figures 1, 3 and 5, the manifold 1 is suited to be hydraulically connected to an air relief valve 14.

Preferably, the manifold 1 comprises an air relief valve 14 supported at the top by the main hollow body 1a, in particular by the wall 1p.

The manifold 1 is also suited to be hydraulically connected to a control and safety valve assembly 15.

Preferably, the manifold 1 comprises a control and safety valve assembly 15 supported at the top by the main hollow body 1a, in particular by the wall 1p.

The manifold 1 is further suited to be hydraulically connected to a temperature sensor 16.

As is visible in Figures 2,4 and 6, one of the internal coupling seats of the hydraulic connections 4 is engaged by the temperature sensor 16.

Examining the characteristics of the manifold 1 manufactured according to the teachings of the present invention, the advantages which it allows obtaining are evident.

In particular, from a functional point of view, the interposition of the sealing element 3, in the O-ring 3a or closed diaphragm 3b configuration, between the two secondary hollow bodies 2 and the optional integration of the separation means 6 within the main hollow body 1 advantageously allow being able to use the manifold 1 in a versatile manner, i.e. as a single-chamber or double-chamber water distribution or collection manifold or as a multi-zone hydraulic separator.

From the constructive point of view, the manifold 1 can be advantageously manufactured by means of thermoplastic moulding without the need for additional processing and costs and it results to be relatively easy to assemble.

## Claims

1. A manifold (1) for multi-zone hydraulic systems comprising:
- a main hollow body (1a) having a tubular development along an axis (L), in which at least one compartment (1b, 1c, 1d) for distributing or collecting hot and/or cold water is defined;
- two secondary hollow bodies (2);
- a sealing element (3) interposed between the two secondary hollow bodies (2) and connecting the two secondary hollow bodies (2) so as to define the main hollow body (1a); wherein the sealing element (3) is designed to define, within the main hollow body (1a), said at least one compartment (1b,1c,1d); and
hot water and cold water separation means (6) housed in the main hollow body (1a) and wherein the sealing element (3) is configured to cooperate with the separation means (6) in order to define, within the main hollow body (1a), a plurality of sections for distributing or collecting hot water and cold water, respectively; wherein the main hollow body (1a) comprises a side wall (1p) and supports guide tracks (7) therein, arranged on the side wall (1p) and extending along the axis (L) over the entire length of the side wall (1p) and designed to be coupled to the separation means (6); and wherein the sealing element (3) is an O-ring (3a), which defines, within the main hollow body (1a), one single compartment (1b) for distributing or collecting hot or cold water; and wherein the separation means (6) are coupled to the guide tracks (7) and divide the compartment (1b) into a first section (8), a second section (9) and a third section (10).

2. The manifold according to claim 1, wherein the separation means (6) comprise a first (11a) and a second through opening (11b) for water outflow; wherein the first through opening (11a) establishes a hydraulic communication between the first section (8) and the third section (10) and the second through opening (11b) establishes a hydraulic communication between the second section (9) and the third section (10).

3. The manifold according to claim 1 or 2, wherein the separation means (6) are inserted inside the main hollow body (1a) in a removable manner.

4. The manifold according to any one of the preceding claims, wherein the separation means (6) are defined by a partition with a V-shaped profile.

5. The manifold according to any one of the preceding claims, wherein the two secondary hollow bodies (2) are identical, comprise respective flanges (2c) configured to support the sealing element (3) and are connected to the sealing element (3) in a mirror-like manner.

6. The manifold according to any one of the preceding claims, wherein each secondary hollow body (2) comprises, on opposite sides, identical hydraulic connections (4).

7. The manifold according to any one of the preceding claims, wherein each secondary hollow body (2) comprises, on opposite sides, identical fixing elements (5) to be fitted to a hydraulic system.

8. The manifold according to any one of the preceding claims and suited to be hydraulically connected to at least one shut-off valve (12a,12b) and/or to a control and safety valve assembly (15) and/or to an air relief valve (14) and/or to a temperature sensor (16).

## Patentansprüche

1. Verteiler (1) für Mehrzonen-Hydrauliksysteme, umfassend:
- einen Haupthohlkörper (1a), aufweisend eine rohrförmige Entwicklung entlang einer Achse (L), in dem mindestens ein Abteil (1b, 1c, 1d) zur Verteilung oder Sammlung von Warm- und/oder Kaltwasser definiert ist;
- zwei Nebenhohlkörper (2);
- ein Dichtungselement (3), das zwischen den beiden Nebenhohlkörpern (2) eingesetzt ist und die beiden Nebenhohlkörper (2) verbindet, sodass der Haupthohlkörper (1a) definiert wird, wobei das Dichtungselement (3) ausgestaltet ist, um innerhalb des Haupthohlkörpers (1a) das mindestens eine Abteil (1b, 1c, 1d) zu definieren, und
Warmwasser- und Kaltwassertrennmittel (6), die in dem Haupthohlkörper (1a) untergebracht sind, und wobei das Dichtungselement (3) ausgelegt ist, um mit den Trennmitteln (6) zusammenzuwirken, um innerhalb des Haupthohlkörpers (1a) eine Vielzahl von Teilabschnitten zur Verteilung oder Sammlung von Warmwasser beziehungsweise Kaltwasser zu definieren, wobei der Haupthohlkörper (1) eine Seitenwand (1p) umfasst und darin Führungsschienen (7) trägt, die an der Seitenwand (1p) angeordnet sind und sich entlang der Achse (L) über die gesamte Länge der Seitenwand (1p) erstrecken und ausgestaltet sind, um mit den Trennmitteln (6) gekoppelt zu werden, und wobei das Dichtungselement (3) ein O-Ring (3a) ist, der innerhalb des Haupthohlkörpers (1a) ein einzelnes Abteil (1b) zur Verteilung oder Sammlung von Warm- oder Kaltwasser definiert, und wobei die Trennmittel (6) mit den Führungsschienen (7) gekoppelt sind und das Abteil (1b) in einen ersten Teilabschnitt (8), einen zweiten Teilabschnitt (9) und einen dritten Teilabschnitt (10) aufteilen.

2. Verteiler nach Anspruch 1, wobei die Trennmittel (6) eine erste (11a) und eine zweite Durchgangsöffnung (11b) für den Wasserausfluss umfassen, wobei die erste Durchgangsöffnung (11a) eine hydraulische Kommunikation zwischen dem ersten Teilabschnitt (8) und dem dritten Teilabschnitt (10) herstellt und die zweite Durchgangsöffnung (11b) eine hydraulische Kommunikation zwischen dem zweiten Teilabschnitt (9) und dem dritten Teilabschnitt (10) herstellt.

3. Verteiler nach Anspruch 1 oder 2, wobei die Trennmittel (6) entfernbar in den Haupthohlkörper (1a) eingefügt sind.

4. Verteiler nach einem der vorhergehenden Ansprüche, wobei die Trennmittel (6) durch eine Unterteilung mit V-förmigem Profil definiert sind.

5. Verteiler nach einem der vorhergehenden Ansprüche, wobei die beiden Nebenhohlkörper (2) identisch sind, jeweilige Flansche (2c) umfassen, die ausgelegt sind, um das Dichtungselement (3) zu tragen, und mit dem Dichtungselement (3) spiegelbildlich verbunden sind.

6. Verteiler nach einem der vorhergehenden Ansprüche, wobei jeder Nebenhohlkörper (2) auf gegenüberliegenden Seiten identische Hydraulikanschlüsse (4) umfasst.

7. Verteiler nach einem der vorhergehenden Ansprüche, wobei jeder Nebenhohlkörper (2) auf gegenüberliegenden Seiten identische Befestigungselemente (5) zum Anbringen an einem Hydrauliksystem umfasst.

8. Verteiler nach einem der vorhergehenden Ansprüche, der dazu geeignet ist, hydraulisch mit mindestens einem Absperrventil (12a, 12b) und/oder einer Steuer- und Sicherheitsventilbaugruppe (15) und/oder einem Entlüftungsventil (14) und/oder einem Temperatursensor (16) verbunden zu werden.

## Revendications

1. Collecteur (1) destiné à des systèmes hydrauliques multi-zones, comprenant :
- un corps creux principal (1a) présentant un développement tubulaire suivant un axe (L), dans lequel est défini au moins un compartiment (1b, 1c, 1d) destiné à la distribution ou à la collecte d'eau chaude et/ou froide ;
- deux corps creux secondaires (2) ;
- un élément d'étanchéité (3) interposé entre les deux corps creux secondaires (2) et reliant les deux corps creux secondaires (2) de manière à définir le corps creux principal (1a) ; dans lequel l'élément d'étanchéité (3) est conçu pour définir, à l'intérieur du corps creux principal (1a), ledit au moins un compartiment (1b, 1c, 1d) ; et
des moyens de séparation d'eau chaude et d'eau froide (6) logés dans le corps creux principal (1a) et dans lequel l'élément d'étanchéité (3) est configuré pour coopérer avec les moyens de séparation (6) afin de définir, à l'intérieur du corps creux principal (1a), une pluralité de sections destinées respectivement à la distribution ou à la collecte d'eau chaude et d'eau froide ; dans lequel le corps creux principal (1a) comprend une paroi latérale (1p) et supporte des glissières de guidage (7) disposées sur la paroi latérale (1p) et s'étendant suivant l'axe (L) sur toute la longueur de la paroi latérale (1p), et conçues pour être couplées aux moyens de séparation (6) ; et dans lequel l'élément d'étanchéité (3) est un joint torique (3a), qui définit, à l'intérieur du corps creux principal (1a), un seul compartiment (1b) pour la distribution ou la collecte de l'eau chaude ou froide ; et dans lequel les moyens de séparation (6) sont couplés aux glissières de guidage (7) et divisent le compartiment (1b) en une première section (8), une deuxième section (9) et une troisième section (10).

2. Collecteur selon la revendication 1, dans lequel les moyens de séparation (6) comprennent une première (11a) et une deuxième (11b) ouvertures traversantes pour l'écoulement de l'eau ; dans lequel la première ouverture traversante (11a) établit une communication hydraulique entre la première section (8) et la troisième section (10) et la deuxième ouverture traversante (11b) établit une communication hydraulique entre la deuxième section (9) et la troisième section (10).

3. Collecteur selon la revendication 1 ou 2, dans lequel les moyens de séparation (6) sont insérés à l'intérieur du corps creux principal (1a) de manière amovible.

4. Collecteur selon l'une quelconque des revendications précédentes, dans lequel les moyens de séparation (6) sont définis par une cloison présentant un profil en V.

5. Collecteur selon l'une quelconque des revendications précédentes, dans lequel les deux corps creux secondaires (2) sont identiques, comportent des brides respectives (2c) configurées pour supporter l'élément d'étanchéité (3) et sont reliés à l'élément d'étanchéité (3) de manière spéculaire.

6. Collecteur selon l'une quelconque des revendications précédentes, dans lequel chaque corps creux secondaire (2) comporte, sur des côtés opposés, des raccords hydrauliques identiques (4).

7. Collecteur selon l'une quelconque des revendications précédentes, dans lequel chaque corps creux secondaire (2) comporte, sur des côtés opposés, des éléments de fixation identiques (5) destinés à être fixés à un système hydraulique.

8. Collecteur selon l'une quelconque des revendications précédentes et adapté pour être raccordé hydrauliquement à au moins une vanne d'arrêt (12a, 12b) et/ou à un ensemble de vannes de commande et de sécurité (15) et/ou à une soupape de décharge d'air (14) et/ou à un capteur de température (16).
